# EUROPEAN PATENT APPLICATION

(11) **EP 4 726 003 A1**
(43) Date of publication of application: **15.04.2026**
(21) Application number: 24819347.6
(22) Date of filing: 05.06.2024
(51) Int. Cl.: C09D 193/04, C09D 5/16, C09D 7/61, C09D 7/63

(54) **UNDERWATER ANTIFOULING COATING COMPOSITION**

(30) Priority: 07.06.2023 JP 2023094044
(71) Applicant: Chugoku Marine Paints, Ltd., Hiroshima 739-0652 (JP)
(72) Inventor: TANINO Soichiro, Otake-shi, Hiroshima 739-0652 (JP)
(74) Representative: Hoffmann Eitle
(86) International application number: PCT/JP2024/020461
(87) International publication number: WO 2024/253119

(57) **Abstract**

One embodiment of the present invention relates to an underwater antifouling coating composition, an antifouling coating film, a substrate with an antifouling coating film or a method for producing the same, or an antifouling method for a substrate, and the underwater antifouling coating composition contains a rosin compound (A) and a pigment (B), the rosin compound (A) contains a rosin compound monomer (A1) and a rosin compound multimer (A2), a content of the multimer (A2) is 0.1 to 5 parts by mass with respect to 1 part by mass of a content of the monomer (A1), and a content of a xylene insoluble component in the underwater antifouling coating composition is 50 to 90 mass% with respect to 100 mass% of the solid content of the underwater antifouling coating composition.

## Description

### Technical Field

One embodiment of the present invention relates to an underwater antifouling coating composition, an antifouling coating film, a substrate with an antifouling coating film or a method for producing the same, or an antifouling method for a substrate.

### Background Art

In order to avoid an underwater structure such as a ship bottom from suffering an economic loss caused by, for example, an increase in propulsion resistance due to adhesion of aquatic organisms, or damage due to erosion by aquatic organisms, an antifouling method for the underwater structure by applying an antifouling coating composition to a surface thereof to form an antifouling coating film is generally adopted.

As such an antifouling coating composition, for example, Patent Literature 1 describes an antifouling coating composition capable of exhibiting an aquatic organism adhesion-preventing performance for a long period of time.

### Citation List

### Patent Literature

Patent Literature 1: JP H10-030071 A

### Summary of Invention

### Technical Problem

Among aquatic organisms, in particular, barnacles have a strong adhesive force and are embedded in an antifouling coating film, and therefore even if barnacles adhering to the antifouling coating film are tried to be removed from the antifouling coating film, the damage is so severe that, for example, the antifouling coating film is peeled off together or unevenness appears on the antifouling coating film, requiring repair of the antifouling coating film.

When an antifouling coating composition is applied to, for example, a ship bottom and dried (naturally) to form an antifouling coating film, the antifouling coating composition applied may be exposed to wind (natural wind) in the process of drying. It has been found that when an antifouling coating film is formed from an antifouling coating composition containing a rosin compound, wrinkles tend to easily occur on the surface of the antifouling coating film to be formed when such wind is received.

It has been found that the conventional antifouling coating composition such as those described in Patent Literature 1 has room for improvement in terms of suppressing the occurrence of such wrinkles, and adhesion of barnacles and embedding of barnacles to an antifouling coating film formed from the antifouling coating composition.

One embodiment of the present invention provides an underwater antifouling coating composition capable of forming an antifouling coating film, in which wrinkles are less likely to occur even if wind is received when an antifouling coating film is formed, and capable of forming an antifouling coating film, with which adhesion of barnacles and embedding of barnacles can be suppressed.

### Solution to Problem

As a result of intensive studies by the present inventors, it has been found that the above problem can be solved according to the following configuration example.

A configuration example of the present invention is as follows.

[1] An underwater antifouling coating composition containing
   a rosin compound (A) and a pigment (B), wherein
   the rosin compound (A) contains a rosin compound monomer (A1) and a rosin compound multimer (A2),
   a content of the multimer (A2) is 0.1 to 5 parts by mass with respect to 1 part by mass of a content of the monomer (A1), and
   a content of a xylene insoluble component in the underwater antifouling coating composition is 50 to 90 mass% with respect to 100 mass% of the solid content of the underwater antifouling coating composition.
[2] The underwater antifouling coating composition according to [1], wherein a content of the multimer (A2) is 1 to 20 mass% with respect to 100 mass% of the solid content of the underwater antifouling coating composition.
[3] The underwater antifouling coating composition according to [1] or [2], wherein a content of the rosin compound (A) is 10 to 50 mass% with respect to 100 mass% of the solid content of the underwater antifouling coating composition.
[4] The underwater antifouling coating composition according to any one of [1] to [3], wherein the pigment (B) contains a flaky pigment.
[5] The underwater antifouling coating composition according to any one of [1] to [4], wherein the pigment (B) contains talc.
[6] The underwater antifouling coating composition according to any one of [1] to [5], further containing an antifouling agent (C).
[7] The underwater antifouling coating composition according to [6], wherein
   the antifouling agent (C) contains cuprous oxide, and
   a content of the cuprous oxide is 10 to 70 mass% with respect to 100 mass% of the solid content of the underwater antifouling coating composition.
[8] The underwater antifouling coating composition according to [6] or [7], wherein a total content of the pigment (B) and the antifouling agent (C) is 40 to 90 mass% with respect to 100 mass% of the solid content of the underwater antifouling coating composition.
[9] The underwater antifouling coating composition according to any one of [1] to [8], further containing a monocarboxylic acid compound (D) other than the rosin compound (A).
[10] The underwater antifouling coating composition according to [9], wherein the monocarboxylic acid compound (D) contains a branched aliphatic carboxylic acid having 3 to 30 carbon atoms.
[11] An antifouling coating film formed from the underwater antifouling coating composition according to any one of [1] to [10].
[12] A substrate with an antifouling coating film, including a substrate and the antifouling coating film according to [11].
[13] A method for producing a substrate with an antifouling coating film, including a step of providing the underwater antifouling coating composition according to any one of [1] to [10] on at least a part of a substrate, followed by drying.
[14] An antifouling method for a substrate, including a step of forming the antifouling coating film according to [11] on at least a part of a substrate.

### Advantageous Effects of Invention

According to an embodiment of the present invention, it is possible to form an antifouling coating film in which wrinkles are less likely to occur even if wind is received when an antifouling coating film is formed.

In addition, according to an embodiment of the present invention, it is possible to form an antifouling coating film which has a high antifouling property (adhesion suppressing property) against aquatic organisms, particularly barnacles, and can suppress embedding of the barnacles and remove the barnacles by a simple method such as water washing even if aquatic organisms, particularly barnacles adhere thereto. Therefore, according to an embodiment of the present invention, it is possible to form an antifouling coating film capable of suppressing damage due to aquatic organisms, particularly barnacles, and repair due to the damage.

### Description of Embodiments

### <<Underwater antifouling coating composition>>

The underwater antifouling coating composition according to an embodiment of the present invention (hereinafter also referred to as "present composition") is a composition, which contains a rosin compound (A) and a pigment (B), wherein
the rosin compound (A) contains a rosin compound monomer (A1) and a rosin compound multimer (A2),
a content of the multimer (A2) is 0.1 to 5 parts by mass with respect to 1 part by mass of a content of the monomer (A1), and
a content of a xylene insoluble component in the present composition is 50 to 90 mass% with respect to 100 mass% of the solid content of the present composition.

The content of the xylene insoluble component in the present composition is 50 to 90 mass%, preferably 52 to 85 mass%, and more preferably 55 to 80 mass% with respect to 100 mass% of the solid content of the present composition.

When the present composition in which the content of the xylene insoluble component is within the above range is used, it is possible to form an antifouling coating film in which wrinkles are less likely to occur even if wind is received when an antifouling coating film is formed.

Specifically, the content of the xylene insoluble component is measured by the method described in the following examples.

The "solid content" of the present composition means components other than the solvent in the present composition, and one obtained by drying the present composition in a hot air dryer at 105°C for 1 hour is defined as the solid content.

### <Rosin Compound (A)>

The rosin compound (rosin-based compound) (A) contains a rosin compound monomer (rosin-based compound monomer) (A1) and a rosin compound multimer (rosin-based compound multimer) (A2).

Examples of the rosin compound include compounds containing, for example, abietic acid, palustric acid, and/or isopimaric acid as a main component.

The incorporation of the monomer (A1) and the multimer (A2) in the compound (A) can be determined, for example, by observing a plurality of peaks in measurement results measured under the following GPC conditions.

In addition, the content ratio of the monomer (A1) and the multimer (A2) in the compound (A) can be calculated, for example, from the ratio of the peak area of the peak identified as the monomer (A1) and the peak area of the peak identified as the multimer (A2) among a plurality of peaks of measurement results measured under the following GPC conditions.

### · GPC conditions

Apparatus: "HLC-8420GPC" (manufactured by Tosoh Corporation)
Column: one "TSKgel guardcolumn SuperH-L" (4.6 mm (inner diameter), 3.5 cm (length) manufactured by Tosoh Corporation), one "TSKgel SuperH2000" (6 mm (inner diameter), 15 cm (length) manufactured by Tosoh Corporation), and two "TSKgel SuperH4000" (6 mm (inner diameter), 15 cm (length) manufactured by Tosoh Corporation)
Eluent: tetrahydrofuran (THF)
Flow rate: 0.600 mL/min
Detector: RI
Column thermostat temperature: 40°C
Standard substance: polystyrene
Sample preparation method: The compound (A) whose concentration was adjusted with THF so that the solid content concentration was 1.5 mass% was filtered through a membrane filter (0.45 µm), and the obtained filtrate was used as a GPC measurement sample.

The content of the compound (A) in the present composition is preferably 10 to 50 mass%, more preferably 15 to 45 mass%, and still more preferably 20 to 40 mass% with respect to 100 mass% of the solid content of the present composition.

When the content of the compound (A) is in the above range, wrinkles are less likely to occur during coating film formation, and an antifouling coating film having a high antifouling property (adhesion suppressing property) against aquatic organisms, particularly barnacles can be easily formed.

The present composition may contain the compound (A) which is a plant-derived component, and in one embodiment of the present invention, the binder component in the present composition may be substantially only the compound (A). In this case, the present composition becomes a composition in which the content of a plant-derived component is high, and the amount of fossil resources used is reduced as compared with the conventional one. Such a present composition contributes to suppression of an increase in the concentration of carbon dioxide in the atmosphere and can contribute to reduction of environmental burden.

### [Rosin compound monomer (A1)]

Examples of the rosin compound monomer (A1) include rosin, a rosin derivative, a rosin metal salt, and pine tar, and among these, rosin is preferable from the viewpoint that, for example, the effect of the present composition is more demonstrated.

Examples of the rosin include gum rosin, wood rosin, and tall oil rosin, and gum rosin is preferable.

Examples of the rosin derivative include hydrogenated rosin, disproportionated rosin, maleated rosin, and formylated rosin.

Examples of the rosin metal salt include zinc rosinate, calcium rosinate, copper rosinate, magnesium rosinate, and a reaction product of another metal compound and rosin.

The monomer (A1) used in the present composition may be of one type or two or more types.

The content of the monomer (A1) in the present composition is preferably 5 to 45 mass%, more preferably 10 to 40 mass%, and still more preferably 15 to 35 mass% with respect to 100 mass% of the solid content of the present composition.

When the content of the monomer (A1) is within the above range, an antifouling coating film having a high antifouling property (adhesion suppressing property) against aquatic organisms, particularly barnacles can be easily formed.

### [Rosin compound multimer (A2)]

The rosin compound multimer (A2) is a multimer of the monomer (A1). The multimer is preferably a dimer.

The multimer (A2) can be obtained by, for example, polymerizing (for example, dimerizing) the monomer (A1) by a method described in JP 2002-201433 A.

The multimer (A2) used in the present composition may be of one type or two or more types.

The content of the multimer (A2) in the present composition is 0.1 to 5 parts by mass, preferably 0.11 to 3 parts by mass, more preferably 0.12 to 1 part by mass, more preferably 0.12 to 0.8 parts by mass, more preferably 0.12 to 0.7 parts by mass, still more preferably 0.13 to 0.5 parts by mass, and particularly preferably 0.14 to 0.3 parts by mass with respect to 1 part by mass of the content of the monomer (A1) in the present composition.

When the content of the multimer (A2) with respect to the content of the monomer (A1) is within the above range, an antifouling coating film having good water resistance under water immersion and excellent in durability of the antifouling property can be easily formed.

The content of the multimer (A2) in the present composition is preferably 1 to 20 mass%, more preferably 1.5 to 15 mass%, and still more preferably 2 to 10 mass% with respect to 100 mass% of the solid content of the present composition.

When the content of the multimer (A2) with respect to the solid content of the present composition is within the above range, an antifouling coating film having good water resistance under water immersion and excellent in durability of the antifouling property can be easily formed.

### <Pigment (B)>

The pigment (B) is not particularly limited, and conventionally known pigments can be used.

Examples of the pigment (B) include a flaky pigment (B1), a zinc oxide (B2), and other pigments (B3).

The pigment (B) used in the present composition may be of one type or two or more types.

The content of the pigment (B) in the present composition is preferably 5 to 70 mass%, more preferably 10 to 60 mass%, and still more preferably 15 to 55 mass% with respect to 100 mass% of the solid content of the present composition.

When the content of the pigment (B) is in the above range, a composition more excellent in coating application workability can be easily obtained, occurrence of wrinkles during coating film formation can be suppressed, and an antifouling coating film more excellent in adhesiveness to a substrate due to stress relief in the coating film and also excellent in water resistance during water immersion can be easily formed.

### [Flaky pigment (B1)]

When the flaky pigment (B1) is used in the present composition, there is a tendency that a crack that can occur in the antifouling coating film to be formed can be suppressed, and an antifouling coating film in which internal stress is relieved can be easily formed.

When the flaky pigment (B1) is used in the present composition, the flaky pigment (B1) to be used may be of one type or two or more types.

Examples of the flaky pigment (B1) include talc, mica, glass flakes, aluminum flakes, flake-shaped iron oxide, stainless steel flakes, and plastic flakes, and among these, talc and mica are preferable, and talc is more preferable from the viewpoint that, for example, the crack can be further suppressed.

The median diameter (D50) of the flaky pigment (B1) is preferably 5 to 200 µm.

The average aspect ratio (median diameter/average thickness) of the flaky pigment (B1) is preferably 3 to 150, and more preferably 5 to 100.

In the present description, D50 can be measured using a laser scattering diffraction particle size distribution analyzer, for example, "SALD 2200" (manufactured by Shimadzu Corporation).

The average thickness can be calculated as an average value of thicknesses of several tens to several hundreds of pigment particles by observation from a horizontal direction with respect to the main surface of the flaky pigment (B1) using a scanning electron microscope (SEM), for example, "XL-30" (manufactured by Philips).

When the present composition contains the flaky pigment (B1), the content thereof is preferably 1 to 30 mass%, and more preferably 3 to 20 mass% with respect to 100 mass% of the solid content of the present composition from the viewpoint that, for example, an antifouling coating film more excellent in the above effect can be easily formed.

### [Zinc oxide (B2)]

When zinc oxide (B2) is used in the present composition, there is a tendency that an antifouling coating film which has a sufficient antifouling property and is excellent in water resistance can be easily formed.

The shape, median diameter (D50), and others of zinc oxide (B2) are not particularly limited, and when zinc oxide (B2) is used in the present composition, two or more types of zinc oxide (B2) having different shapes, D50, and others may be used.

The D50 of zinc oxide (B2) is preferably 0.01 µm or more, more preferably 0.05 µm or more, particularly preferably 0.1 µm or more, and preferably 10 µm or less, more preferably 5 µm or less from the viewpoint that zinc oxide (B2) is easily dispersed well in the present composition and from the viewpoint that the antifouling property of an antifouling coating film to be obtained is improved.

When the present composition contains zinc oxide (B2), the content thereof is preferably 1 to 50 mass% and more preferably 3 to 40 mass% with respect to 100 mass% of the solid content of the present composition from the viewpoint that, for example, an antifouling coating film more excellent in the above effect can be easily formed.

### [Another pigment (B3)]

The present composition may contain another pigment (B3) other than the flaky pigment (B1) and the zinc oxide (B2) for the purpose of, for example, coloring the antifouling coating film and concealing the base, and for the purpose of adjusting the antifouling coating film strength to an appropriate level.

When another pigment (B3) is used in the present composition, the another pigment (B3) to be used may be of one type or two or more types.

Examples of the another pigment (B3) include extender pigments such as silica, zinc phosphate, clay, potassium feldspar, calcium carbonate, kaolin, alumina white, white carbon, aluminum hydroxide, magnesium carbonate, barium carbonate, barium sulfate, calcium sulfate, and zinc sulfide; and color pigments such as Bengara (red iron oxide), titanium white (titanium oxide), yellow iron oxide, carbon black, naphthol red, and phthalocyanine blue.

When the present composition contains another pigment (B3), the total content thereof may be appropriately set according to, for example, the colorability/concealability required for the antifouling coating film to be formed, or the viscosity required for the present composition, and is preferably 1 to 40 mass%, more preferably 3 to 30 mass% with respect to 100 mass% of the solid content of the present composition.

### <Other optional components>

The present composition may contain other optional components other than the rosin compound (A) and the pigment (B) as necessary.

Examples of the other optional components include an antifouling agent (C), a monocarboxylic acid compound (D), a polybasic acid (E), a solvent (F), a plasticizer (G), an anti-sagging agent/anti-settling agent (H), another binder component, an antifoaming agent, a wet dispersant, and a dehydrating agent.

When other optional components are used in the present composition, each of the other optional components to be used may be of one type or two or more types.

### [Antifouling agent (C)]

In order to improve the antifouling property of the antifouling coating film formed from the present composition, the present composition preferably further contains an antifouling agent (C).

When the antifouling agent (C) is used in the present composition, the antifouling agent (C) to be used may be of one type or two or more types.

When the present composition contains the antifouling agent (C), the content thereof is preferably 1 to 80 mass% and more preferably 10 to 70 mass% with respect to 100 mass% of the solid content of the present composition from the viewpoint that, for example, an antifouling coating film having a sufficient antifouling property can be easily formed.

In addition, when the present composition contains the antifouling agent (C), the total content of the pigment (B) and the antifouling agent (C) is preferably 40 to 90 mass%, more preferably 45 to 85 mass%, and still more preferably 50 to 80 mass% with respect to 100 mass% of the solid content of the present composition from the viewpoint that, for example, an antifouling coating film excellent in water resistance and having a high antifouling property (adhesion suppressing property) against aquatic organisms can be easily formed.

Examples of the antifouling agent (C) include (+/-)-4-[1-(2,3-dimethylphenyl)ethyl]-1H-imidazole (also known as medetomidine);
4-bromo-2-(4-chlorophenyl)-5-(trifluoromethyl)-1H-pyrrole-3-carbonitrile (also known as tralopyril);
metal pyrithione compounds such as copper pyrithione and zinc pyrithione;
4,5-dichloro-2-n-octyl-4-isothiazoline-3-one (also known as DCOIT);
borane-nitrogen base adducts such as pyridine triphenylborane and 4-isopropylpyridine(N-B)methyl(diphenyl)borane;
N,N-dimethyl-N'-(3,4-dichlorophenyl)urea;
maleimide compounds such as N-(2,4,6-trichlorophenyl)maleimide, 2,3-dichloro-N-(2',6'-diethylphenyl)maleimide, and 2,3-dichloro-N-(2'-ethyl-6'-methylphenyl)maleimide;
2-methylthio-4-tert-butylamino-6-cyclopropylamino-1,3,5-triazine;
2,4,5,6-tetrachloroisophthalonitrile;
carbamate compounds such as bisdimethyldithiocarbamoyl zinc ethylene bisdithiocarbamate, zinc dimethyldithiocarbamate, and zinc etylene bisdithiocarbamate;
disulfide compounds such as chloromethyl-n-octyl disulfide and tetraalkylthiuram disulfide;
N',N'-dimethyl-N-phenyl-(N-fluorodichloromethylthio)sulfamide;
and copper compounds such as cuprous oxide, copper oxide, copper (metal copper), and copper thiocyanate (also known as copper rhodanide).

Among them, the antifouling agent (C) preferably contains at least one selected from medetomidine, tralopyril, DCOIT, a metal pyrithione compound (for example, copper pyrithione or zinc pyrithione), and a copper compound (for example, cuprous oxide or copper rhodanide), more preferably contains at least one selected from a metal pyrithione compound and cuprous oxide, and particularly preferably contains a metal pyrithione compound and cuprous oxide from the viewpoint that, for example, an antifouling coating film having a high antifouling property (adhesion suppressing property) against aquatic organisms, particularly barnacles can be easily formed.

Although medetomidine has optical isomerism, when medetomidine is used in the present composition, only one optical isomer thereof may be used, or a mixture of optical isomers in an arbitrary ratio may be used.

As the medetomidine, an imidazolium salt of medetomidine or an adduct of medetomidine to, for example, a metal may be used. In this case, as a raw material in preparing the present composition, an imidazolium salt or an adduct to, for example, a metal may be used, or an imidazolium salt or an adduct to, for example, a metal may be formed in the present composition or an antifouling coating film.

### · Cuprous oxide

The cuprous oxide is preferably in the form of particles having a median diameter (D50) of about 0.1 to 30 µm from the viewpoint that, for example, an antifouling coating film having an antifouling property for a long period of time can be easily formed.

As the cuprous oxide, cuprous oxide surface-treated with glycerin, stearic acid, lauric acid, sucrose, lecithin, or mineral oil is preferable in that, for example, the present composition excellent in long-term stability during storage can be easily obtained.

When the present composition contains cuprous oxide, the content thereof is preferably 10 to 70 mass%, more preferably 15 to 65 mass%, and still more preferably 20 to 60 mass% with respect to 100 mass% of the solid content of the present composition from the viewpoint that, for example, an antifouling coating film having a sufficient antifouling property can be easily formed.

### · Metal pyrithione compound

As the metal pyrithione compound, copper pyrithione and zinc pyrithione are preferable, and copper pyrithione is preferable from the viewpoint that, for example, an antifouling coating film excellent in water resistance, crack resistance, and antifouling property can be easily formed.

When the present composition contains a metal pyrithione, the content thereof is preferably 0.5 to 20 mass% and more preferably 2 to 15 mass% with respect to 100 mass% of the solid content of the present composition from the viewpoint that, for example, an antifouling coating film having a sufficient antifouling property can be easily formed.

### [Monocarboxylic acid compound (D)]

The present composition may contain a monocarboxylic acid compound (D). When the present composition contains the compound (D), the renewal property of the antifouling coating film to be formed from the surface in water is improved, and when the antifouling coating film contains an antifouling agent, the antifouling property of the antifouling coating film can be improved by promoting release of the antifouling agent into water, the present composition also has a function of imparting moderate water resistance to the antifouling coating film, and the coating application workability of the present composition tends to be improved.

When the compound (D) is used in the present composition, the compound (D) to be used may be of one type or two or more types.

The compound (D) is not particularly limited as long as it is a compound other than the compound (A).

Examples of the compound (D) include compounds represented by R-COOH (R is a saturated or unsaturated aliphatic hydrocarbon group having 10 to 40 carbon atoms, a saturated or unsaturated alicyclic hydrocarbon group having 3 to 40 carbon atoms, or a group in which these groups are partially substituted with heteroatoms) and derivatives thereof (for example, a metal ester). Among them, a branched aliphatic carboxylic acid having 3 to 30 carbon atoms (the branched aliphatic carboxylic acid may contain at least one selected from a heteroatom and a double bond) is preferable as the compound (D) from the viewpoint of, for example, being more excellent in the above effect.

Preferred examples of the compound (D) include trimethylisobutenylcyclohexene carboxylic acid, versatic acid, stearic acid, and naphthenic acid, and among these, versatic acid is particularly preferable from the viewpoint that, for example, an antifouling coating film excellent in coating film physical properties can be easily formed. Versatic acid is a generic term for a highly branched carboxylic acid mixture having 9 to 11 carbon atoms, mainly 10 carbon atoms.

Examples of the metal ester include a zinc ester and a copper ester. When the present composition contains the metal ester, the metal ester may be used as a raw material in preparing the present composition, or the metal ester may be formed in the present composition or an antifouling coating film.

When the present composition contains the compound (D), the content thereof is preferably 0.5 to 10 mass% and more preferably 1 to 7 mass% with respect to 100 mass% of the solid content of the present composition from the viewpoint that, for example, the present composition excellent in coating application workability can be easily obtained, and an antifouling coating film excellent in water resistance can be easily formed.

### [Polybasic acid (E)]

The present composition may contain a polybasic acid (E).

Examples of the polybasic acid (E) include maleic acid, fumaric acid, itaconic acid, citraconic acid, dimer acid, and citric acid.

When the polybasic acid (E) is used in the present composition, the polybasic acid (E) to be used may be of one type or two or more types.

When the present composition contains the polybasic acid (E), the content thereof is preferably 0.5 to 5 mass%, and more preferably 1 to 3 mass% with respect to 100 mass% of the solid content of the present composition from the viewpoint that, for example, an antifouling coating film excellent in water resistance can be easily formed.

### [Solvent (F)]

The present composition may contain a solvent (F) such as water or an organic solvent as necessary for the purpose of, for example, adjusting the viscosity of the composition. The solvent (F) is preferably an organic solvent, and is preferably substantially free of water. That is, the present composition is preferably not an aqueous composition but an organic solvent type composition.

Here, the expression "substantially free of water" means that the proportion of water in the solvent (F) is 10 mass% or less, and preferably 2 mass% or less.

When the solvent (F) is used in the present composition, the solvent (F) to be used may be of one type or two or more types.

Examples of the organic solvent include aromatic organic solvents such as xylene, toluene, and ethylbenzene; ketones such as methyl ethyl ketone, methyl isobutyl ketone, and cyclohexanone; aliphatic (number of carbon atoms: 1 to 10, preferably about 2 to 5) monohydric alcohols such as ethanol, isopropyl alcohol, n-butanol, isobutanol, and propylene glycol monomethyl ether; ester solvents such as ethyl acetate and butyl acetate.

The content of the solvent (F) in the present composition may be 0 mass%, but when the present composition contains the solvent (F), the content thereof is preferably appropriately set so as to achieve a desired viscosity according to the coating application method of the present composition, and is usually preferably 10 to 50 mass%, and more preferably 15 to 40 mass% with respect to 100 mass% of the present composition. When the content of the solvent (F) is too large, a problem such as deterioration of the anti-sagging property may occur.

### [Plasticizer (G)]

The present composition may contain a plasticizer (G) for the purpose of, for example, imparting plasticity to the antifouling coating film to be formed.

When the plasticizer (G) is used in the present composition, the plasticizer (G) to be used may be of one type or two or more types.

Examples of the plasticizer (G) include tricresyl phosphate (TCP), dioctyl phthalate (DOP), diisodecyl phthalate (DIDP), acetyl tributyl citrate, and adipic acid diester.

When the present composition contains the plasticizer (G), the content thereof is preferably 0.1 to 10 mass% and more preferably 0.5 to 5 mass% with respect to 100 mass% of the solid content of the present composition from the viewpoint that, for example, the plasticity of the antifouling coating film to be formed can be well maintained.

### [Anti-sagging agent/anti-settling agent (H)]

The present composition may contain an anti-sagging agent/anti-settling agent (H) for the purpose of, for example, adjusting the viscosity of the composition.

When the anti-sagging agent/anti-settling agent (H) is used in the present composition, the anti-sagging agent/antisettling agent (H) to be used may be of one type or two or more types.

Examples of the anti-sagging agent/anti-settling agent (H) include organic clay waxes (for example, stearate salts, lecithin salts, and alkyl sulfonate salts of Al, Ca or Zn), organic waxes (for example, polyethylene wax, oxidized polyethylene wax, amide wax, polyamide wax, and hydrogenated castor oil wax), mixtures of an organic clay wax and an organic wax, and synthetic fine silica.

When the present composition contains the anti-sagging agent/anti-settling agent (H), the content thereof is preferably 0.01 to 10 mass%, and more preferably 0.1 to 3 mass% with respect to 100 mass% of the solid content of the present composition.

### [Another binder component]

The present composition may contain another binder component other than the compound (A) for the purpose of, for example, imparting a static antifouling property, water resistance, crack resistance, and strength to an antifouling coating film to be formed.

When another binder component is used in the present composition, the another binder component to be used may be of one type or two or more types.

Examples of the another binder component include a polyester (co)polymer, a (meth)acrylic (co)polymer ((meth)acrylic resin), a vinyl (co)polymer (including, for example, polyvinyl ethyl ether), a silyl ester (co)polymer, a metal (for example, zinc or copper) ester (co)polymer, chlorinated paraffin, n-paraffin, a terpene phenol resin, a petroleum resin, and a ketone resin.

### <Method for preparing present composition>

The present composition can be prepared by a method similar to a known method for preparing a general antifouling coating composition.

Specifically, it can be prepared by adding the compound (A), the pigment (B), and if necessary, the other optional components all at once or sequentially to a container, followed by stirring and mixing.

### <<Antifouling coating film, substrate with antifouling coating film, method for producing same, and antifouling method for substrate>>

The antifouling coating film according to an embodiment of the present invention (hereinafter also referred to as "present coating film") is formed from the present composition, and can be usually formed by drying the present composition. The present coating film is usually formed on a substrate, and is used as a substrate with the present coating film having a substrate and the present coating film.

Preferable examples of the method for producing a substrate with the present coating film include a method including a step of providing the present composition on at least a part of a substrate, followed by drying.

The antifouling method for a substrate according to an embodiment of the present invention includes a step of forming the present coating film on at least a part of a substrate. The method for producing a substrate with a present coating film includes a step of forming the present coating film on at least a part of a substrate, and therefore can be said to be an antifouling method for a substrate.

The substrate is not particularly limited, but the present composition is preferably used for, for example, antifouling of the substrate in a wide range of industrial fields such as ships, fishery, and underwater structures, and thus examples of the substrate include ships (for example, hull outer plates of, for example, large steel ships such as container ships and tankers, fishing ships, FRP ships, wooden ships, and yachts, including both newly built ships and repaired ships); fishery materials (for example, rope, fishing net, fishing gear, float, and buoy); diver suit; swimming goggles; oxygen cylinders; swimsuits; torpedoes; and submerged structures such as structures including, for example, oil pipelines, water conduit pipes, circulating water pipes, and water supply/discharge ports of thermal and nuclear power plants, submarine cables, sea water utilization equipment (for example, sea water pumps), megafloats, coastal roads, submarine tunnels, harbor facilities, and various structures for underwater civil engineering works in, for example, canals and water channels. Among these, a ship, an underwater structure, and a fishing material are preferable, a ship and an underwater structure are more preferable, and a ship is particularly preferable.

The substrate may be a substrate treated with another treatment agent such as a rust inhibitor, a substrate having a coating film such as a primer formed on a surface thereof, or a substrate having the present coating film formed thereon. The type of object with which the present coating film is in direct contact is not particularly limited.

The method of providing the present composition on at least a part of a substrate is not particularly limited, and examples thereof include a method of applying the present composition to a substrate and a method of immersing a substrate in the present composition (impregnating a substrate with the present composition).

Examples of the coating application method include known methods such as a method using a brush, a roller, and a spray.

Examples of the drying method include a method of leaving the resultant at ambient temperature (for example, 25°C) for preferably about 0.5 to 14 days, and more preferably about 1 to 7 days. The drying may be performed under heating or may be performed while blowing air.

According to an embodiment of the present invention, it is possible to easily form an antifouling coating film in which wrinkles due to the wind are less likely to occur even when drying is performed while blowing air in this manner.

The thickness of the present coating film after drying may be arbitrarily selected according to, for example, the coating film consumption degree of the present coating film, or the application and period of use of the present coating film, and is preferably, for example, about 30 to 1,000 µm. Examples of the method for forming an antifouling coating film having this thickness include a method in which the present composition is applied one or more times such that a dry coating film having a thickness of preferably 10 to 300 µm, more preferably 30 to 200 µm is obtained per coating application.

The substrate with the present coating film can also be produced by a method including a step (I) of forming the present coating film and a step (II) of attaching the obtained present coating film to a substrate.

The step (I) is not particularly limited, and examples thereof include a method in which a support subjected to a release treatment is used as necessary instead of the substrate in the method of providing the present composition on at least a part of the substrate.

The step (II) is also not particularly limited, and examples thereof include a method described in, for example, JP 2013-129724 A.

### Examples

Hereinafter, an embodiment of the present invention will be described more specifically with reference to examples, but the present invention is not limited by the examples at all.

The "solid content" of each component used in examples means a component obtained by removing a volatile component contained as a solvent in each component, and one obtained by drying each component in a hot air dryer at 105°C for 1 hour is defined as a solid content.

### [Examples 1 to 13 and Comparative Examples 1 to 3]

An underwater antifouling coating composition was prepared by mixing and stirring the respective components to be blended according to the formulation (parts by mass) shown in Table 1.

The blending amount of each component shown in Table 1 indicates the blending amount in the form as it is. For example, in Example 2, the blending amount of fatty acid amide in the form as it is (as a whole) is 1.0 part by mass. Since the solid content of the fatty acid amide is 20 mass%, the blending amount of the fatty acid amide itself in Example 2 is 0.2 parts by mass.

Details of each component used in examples and comparative examples are shown in Table 2.

### <Amount of xylene insoluble component in coating material solid content>

Specifically, the amount of a xylene insoluble component in the coating material solid content (the content of a xylene insoluble component in the solid content of the underwater antifouling coating composition) was measured and calculated by, for example, a method through the following procedures (1) to (6).
(1) A part of the prepared underwater antifouling coating composition was weighed, and the weighed underwater antifouling coating composition and xylene having a mass about 10 times that of the underwater antifouling coating composition were placed in a centrifuge tube and sufficiently mixed.
(2) Centrifugation was performed at 0°C/3,500 rpm for 30 minutes, and then the supernatant was removed and transferred to another container.
(3) The same amount of xylene as in (1) was added again to the residue after the supernatant was removed in the above (2) and mixed, centrifugation was performed under the same conditions, and the supernatant was removed and added to the container containing the first supernatant. This operation was repeated one more time.
(4) The residue obtained by centrifugation 3 times was dried in a hot air dryer at 105°C for 1 hour, and the mass of the remaining solid content was measured.
(5) A part of the remaining underwater antifouling coating composition weighed in the above (1) was dried in a hot air dryer at 105°C for 1 hour, and the solid content of the underwater antifouling coating composition was calculated.
(6) From the solid content of the underwater antifouling coating composition calculated in the above (5), the solid content of the underwater antifouling coating composition weighed in the above (1) was calculated, and from the solid content and the solid content calculated in the above (4), the amount of the xylene insoluble component in the coating material solid content (the content of the xylene insoluble component in the solid content of the underwater antifouling coating composition) was calculated.

### <Coating film formability>

Each of the prepared underwater antifouling coating compositions was applied once to a vinyl chloride plate having a length of 150 mm × a width of 70 mm × a thickness of 3 mm so as to achieve a dry film thickness of 300 µm, and the vinyl chloride plate coated with the composition was placed in a draft for 1 hour under the condition of 25°C so that air substantially parallel to the surface of the applied composition hit the composition at an air velocity of about 2 m/s, and dried to form a coating film.

A case where wrinkles did not occur in the formed coating film was evaluated as "AA ", and a case where wrinkles occurred was evaluated as" BB ". The results are shown in Table 1.

### <Evaluation of resistance to barnacles>

An epoxy resin anti-rust coating composition (trade name: "BANNOH 1500", manufactured by CHUGOKU MARINE PAINTS, LTD.) was applied to a sandblasted steel plate (length 100 mm × width 200 mm × thickness 2.3 mm) so as to achieve a dry film thickness of 150 µm and dried, and then an epoxy resin binder coating composition (trade name: "BANNOH 1500RZ", manufactured by CHUGOKU MARINE PAINTS, LTD.) was applied so as to achieve a dry film thickness of 100 µm and dried.

Subsequently, each of the prepared underwater antifouling coating compositions was applied once such that the dry film thickness of the resulting antifouling coating film was 100 µm, and dried under the condition of 25°C for 7 days to prepare a test plate.

The prepared test plate was fixed to the inner wall of a cylinder, in which a rotating water flow was generated at a surface speed of 10 knots, and placed in a dynamic immersion environment in sea water at 30°C for 3 months, and then immersed in a direction in which the surface of the antifouling coating film was substantially parallel to the water surface at a position of about 2 m below the water surface in Hiroshima bay.

After 3 months from the start of the immersion in this manner, the adhesion area of barnacles on the antifouling coating film was measured, and the resistance to barnacles of the antifouling coating film was evaluated according to the following evaluation criteria for the antifouling property based on the barnacle adhesion area.

In addition, after immersion in Hiroshima bay for 3 months, the test plate was pulled up from the sea, and high-pressure water washing was performed until all barnacles adhering to the antifouling coating film were removed. The surface of the antifouling coating film after high-pressure water washing was visually observed, the area of a portion where the antifouling coating film was lost was measured, and the damage of the antifouling coating film due to embedding of barnacles in the antifouling coating film was evaluated according to the following evaluation criteria for the lost area of the coating film.

These results are shown in Table 1.

The antifouling coating film of Comparative Example 1 could not be accurately evaluated because all the antifouling coating film disappeared after being placed in a dynamic immersion environment. Therefore, the evaluation was expressed by "-".

### (Evaluation criteria for antifouling property based on barnacle adhesion area)

5: The total area where barnacles adhered with respect to 100% of the entire surface of the antifouling coating film is less than 1%.
4: The area is 1% or more and less than 10%.
3: The area is 10% or more and less than 30%.
2: The area is 30% or more and less than 70%.
1: The area is 70% or more.

### (Evaluation criteria for lost area of coating film)

5: The total area of a portion where the antifouling coating film is lost is less than 1% with respect to 100% of the entire surface of the antifouling coating film.
4: The area is 1% or more and less than 5%.
3: The area is 5% or more and less than 20%.
2: The area is 20% or more and less than 40%.
1: The area is 40% or more.

**[Table 1]**

| | | Example | | | | | | | | | | | | | Comparative Example | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 | 3 |
| (A) | Rosin compound 1 | 9.5 | 15.0 | 11.0 | 18.0 | 9.5 | 8.5 | 15.0 | 12.0 | 12.0 | 8.0 | 9.5 | 6.5 | 15.0 | | 19.0 | 21.6 |
| | Rosin monomer | 7.5 | 11.0 | 8.5 | 12.0 | 7.5 | 7.5 | 10.0 | 10.0 | 10.0 | 7.0 | 7.5 | 10.5 | 2.0 | 16.0 | 17.0 | 14.4 |
| (B) | Red iron oxide | 4.0 | 6.0 | 5.0 | 7.0 | 4.0 | 4.0 | 6.0 | | | 3.0 | 4.0 | 4.0 | 4.0 | 4.0 | 1.5 | 5.3 |
| | Zinc oxide | 5.0 | 8.0 | 6.0 | 9.0 | 5.0 | 5.0 | 8.0 | 20.0 | 15.0 | 4.0 | 5.0 | 5.0 | 5.0 | 5.0 | 2.0 | 6.8 |
| | Barium sulfate | | | | | | | | 10.0 | | | | | | | | |
| | Nano silica | | | | | | | 5.0 | | | | | | | | | |
| | Potassium feldspar | | | 12.0 | | | | | | | | | | | | | |
| | Talc | 5.0 | 10.0 | 10.0 | 5.0 | 5.0 | 5.0 | 5.0 | 4.0 | 4.0 | 5.0 | 5.0 | 5.0 | 5.0 | 5.0 | 2.0 | 3.8 |
| (C) | Cuprous oxide | 45.0 | 22.0 | 23.0 | 16.0 | 45.0 | 45.0 | 22.0 | | | 50.0 | 45.0 | 45.0 | 45.0 | 45.0 | 15.0 | 12.0 |
| | Copper pyrithione | 2.0 | 3.0 | 2.0 | 4.0 | | 2.0 | 3.0 | | | 2.0 | 0.9 | 2.0 | 2.0 | 2.0 | 1.0 | 3.0 |
| | Zinc pyrithione | | | | | | | | 5.0 | 2.0 | | | | | | | |
| | Copper rhodanide | | | | | | | | | 20.0 | | | | | | | |
| | DCOIT | | | | | 2.0 | | | | | | 1.0 | | | | | |
| | Tralopyril | | | | | | | | 3.0 | | | | | | | | |
| | Medetomidine | | | | 0.1 | | | | 0.1 | 0.1 | | 0.1 | | | | | |
| (D) | Versatic acid | 2.0 | 3.0 | 2.0 | 3.0 | | | 3.0 | 2.0 | 2.0 | 1.5 | 2.0 | 2.0 | 2.0 | 2.0 | 4.0 | 3.6 |
| (E) | Dimer acid | | | | | | 1.0 | | | | | | | | | | |
| (F) | Xylene | 19.0 | 21.0 | 19.5 | 24.0 | 19.0 | 21.0 | 22.0 | 24.0 | 25.0 | 18.5 | 19.0 | 19.0 | 19.0 | 20.0 | 37.5 | 28.7 |
| | PGM | | | | 0.9 | | | | 5.9 | 5.9 | | | | | | | |
| (G) | ATBC | | | | | | | | 3.0 | 3.0 | | | | | | | |
| | Daifatty 101 | | | | | 2.0 | | | | | | | | | | | |
| (H) | Organically modified bentonite | 1.0 | | 1.0 | 1.0 | 1.0 | 1.0 | | | | 1.0 | 1.0 | 1.0 | 1.0 | 1.0 | 1.0 | 0.8 |
| | Fatty acid amide | | 1.0 | | | | | 1.0 | 1.0 | 1.0 | | | | | | | |
| Total (parts by mass) | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| ■ Calculated value | | | | | | | | | | | | | | | | | |
| Coating material solid content (mass%) | | 81.0 | 78.2 | 80.5 | 75.1 | 77.6 | 79.0 | 77.2 | 66.3 | 65.3 | 81.5 | 80.3 | 81.0 | 81.0 | 80.0 | 62.5 | 71.3 |
| (A2) / (A1) | | 0.16 | 0.17 | 0.16 | 0.18 | 0.16 | 0.15 | 0.18 | 0.16 | 0.16 | 0.15 | 0.16 | 0.11 | 0.28 | 0.00 | 0.15 | 0.18 |
| Amount of (A2) in coating material solid content (mass%) | | 2.9 | 4.8 | 3.4 | 6.0 | 3.1 | 2.7 | 4.9 | 4.5 | 4.6 | 2.5 | 3.0 | 2.0 | 4.6 | 0.0 | 7.6 | 7.6 |
| Amount of xylene insoluble component in coating material solid content | | 76.5 | 62.9 | 73.3 | 55.9 | 77.3 | 78.5 | 63.7 | 59.1 | 63.1 | 79.8 | 75.8 | 76.5 | 76.5 | 77.5 | 36.0 | 44.5 |
| ■ Evaluation results | | | | | | | | | | | | | | | | | |
| Coating film formability | | AA | AA | AA | AA | AA | AA | AA | AA | AA | AA | AA | AA | AA | AA | BB | BB |
| Barnacle adhesion area | | 5 | 4 | 4 | 5 | 4 | 4 | 5 | 4 | 4 | 5 | 5 | 5 | 5 | - | 2 | 2 |
| Lost area of coating film | | 5 | 5 | 5 | 4 | 5 | 5 | 5 | 4 | 4 | 5 | 5 | 4 | 5 | - | 1 | 2 |

**[Table 2]**

| Classification | Component name | Details |
|---|---|---|
| (A) | Rosin compound 1 | Manufactured by Arakawa Chemical Industries, Ltd., acid value: 170, monomer : dimer = 75 : 25 |
| | Rosin monomer | Gum rosin WW, made in China, acid value: 170 |
| (B) | Red iron oxide | Manufactured by Morishita Bengara Kogyo K.K., "Bengara No. 404" |
| | Zinc oxide | Manufactured by Hakusui Tech Co., Ltd., "Zinc Oxide Grade 2", median diameter (D50): 0.7 to 1.1 µm |
| | Barium sulfate | Manufactured by Sakai Chemical Industry Co., Ltd., "Precipitated barium sulfate 100" |
| | Nano silica | Manufactured by NIPPON AEROSIL CO., LTD., "AEROSIL 200" amorphous silica, no surface treatment |
| | Potassium feldspar | Manufactured by Sibelco Malaysia, "Feldspar PG-K10" |
| | Talc | Manufactured by Takehara Kagaku Kogyo Co., Ltd., "TTK Talc" |
| (C) | Cuprous oxide | Manufactured by American Chemet Cororation "Red Copp 97N Premium" |
| | Copper pyrithione | Manufactured by Arch UK Biocides Ltd., "Copper Omadine Powder" chemical formula: Cu(-S-C₅H₄N-O-)₂ |
| | Copper rhodanide | Manufactured by NIHON KAGAKU SANGYO CO., LTD., "Copper rhodanide", chemical name: copper(I) thiocyanate, anhydride |
| | DCOIT | Manufactured by Rohm and Haas Japan K.K., "SEA NINE 211N", chemical name: 4,5-dichloro-2-n-octyl-4-isothiazolin-3-one, solid content: 30 mass% xylene solution |
| | Tralopyril | Manufactured by JANSSEN Sourcing Singapore, "ECONEA TECHNICAL" |
| | Medetomidine | Manufactured by I-tech AB, "Selektope", chemical name: (+/-)-4-[1-(2,3-dimethylphenyl)ethyl]-1H-imidazole |
| (D) | Versatic acid | Manufactured by Japan Epoxy Resins Co., Ltd., "Versatic 10" neodecanoic acid |
| (E) | Dimer acid | Manufactured by Harima Chemicals, Inc., "HARIDIMER 200" |
| (F) | Xylene | Industrial xylene (mixture of ortho-, meta-, para-xylene, and ethylbenzene) |
| | PGM | Propylene glycol monomethyl ether |
| (G) | ATBC | Acetyl tributyl citrate |
| | Daifatty 101 | Manufactured by Daihachi Chemical Industry Co., Ltd., "Daiffaty 101", benzyl alcohol/adipic acid/ester compound of diethylene glycol monomethyl ether |
| (H) | Organically modified bentonite | Manufactured by Elementis Japan KK., "BENTONE 34", Organic bentonite |
| | Fatty acid amide | Manufactured by Kusumoto Chemicals, Ltd., "Disparlon 6900-20X", solid content: 20 mass% |

The content ratio of the rosin compound monomer and the rosin compound multimer (dimer) in "Rosin compound 1" in Table 2 is the peak area ratio of GPC measured under the following conditions.

### · GPC conditions

Apparatus: "HLC-8420GPC" (manufactured by Tosoh Corporation)
Column: one "TSKgel guardcolumn SuperH-L" (4.6 mm (inner diameter), 3.5 cm (length) manufactured by Tosoh Corporation), one "TSKgel SuperH2000" (6 mm (inner diameter), 15 cm (length) manufactured by Tosoh Corporation), and two "TSKgel SuperH4000" (6 mm (inner diameter), 15 cm (length) manufactured by Tosoh Corporation)
Eluent: tetrahydrofuran (THF)
Flow rate: 0.600 mL/min
Detector: RI
Column thermostat temperature: 40°C
Standard substance: polystyrene
Sample preparation method: The rosin compound 1 whose concentration was adjusted with THF so that the solid content concentration was 1.5 mass% was filtered through a membrane filter (0.45 µm), and the obtained filtrate was used as a GPC measurement sample.

## Claims

1. An underwater antifouling coating composition comprising:
a rosin compound (A) and a pigment (B), wherein
the rosin compound (A) contains a rosin compound monomer (A1) and a rosin compound multimer (A2),
a content of the multimer (A2) is 0.1 to 5 parts by mass with respect to 1 part by mass of a content of the monomer (A1), and
a content of a xylene insoluble component in the underwater antifouling coating composition is 50 to 90 mass% with respect to 100 mass% of the solid content of the underwater antifouling coating composition.

2. The underwater antifouling coating composition according to claim 1, wherein a content of the multimer (A2) is 1 to 20 mass% with respect to 100 mass% of the solid content of the underwater antifouling coating composition.

3. The underwater antifouling coating composition according to claim 1, wherein a content of the rosin compound (A) is 10 to 50 mass% with respect to 100 mass% of the solid content of the underwater antifouling coating composition.

4. The underwater antifouling coating composition according to claim 1, wherein the pigment (B) contains a flaky pigment.

5. The underwater antifouling coating composition according to claim 1, wherein the pigment (B) contains talc.

6. The underwater antifouling coating composition according to claim 1, further comprising an antifouling agent (C).

7. The underwater antifouling coating composition according to claim 6, wherein
the antifouling agent (C) contains cuprous oxide, and
a content of the cuprous oxide is 10 to 70 mass% with respect to 100 mass% of the solid content of the underwater antifouling coating composition.

8. The underwater antifouling coating composition according to claim 6, wherein a total content of the pigment (B) and the antifouling agent (C) is 40 to 90 mass% with respect to 100 mass% of the solid content of the underwater antifouling coating composition.

9. The underwater antifouling coating composition according to claim 1, further comprising a monocarboxylic acid compound (D) other than the rosin compound (A).

10. The underwater antifouling coating composition according to claim 9, wherein the monocarboxylic acid compound (D) contains a branched aliphatic carboxylic acid having 3 to 30 carbon atoms.

11. An antifouling coating film formed from the underwater antifouling coating composition according to any one of claims 1 to 10.

12. A substrate with an antifouling coating film, comprising a substrate and the antifouling coating film according to claim 11.

13. A method for producing a substrate with an antifouling coating film, comprising a step of providing the underwater antifouling coating composition according to any one of claims 1 to 10 on at least a part of a substrate, followed by drying.

14. An antifouling method for a substrate, comprising a step of forming the antifouling coating film according to claim 11 on at least a part of a substrate.
